# EUROPÄISCHE PATENTSCHRIFT

(11) **EP 1 523 429 B1**
(45) Veröffentlichungstag und Bekanntmachung des Hinweises auf die Patenterteilung: **28.04.2010**
(21) Anmeldenummer: 03764936.5
(22) Anmeldetag: 04.07.2003
(51) Int. Cl.: B60N 2/07, F16C 29/04

(54) **LÄNGSEINSTELLER FÜR EINEN FAHRZEUGSITZ**
DEVICE FOR ADJUSTING A VEHICLE SEAT IN THE LONGITUDINAL DIRECTION
DISPOSITIF PERMETTANT DE REGLER UN SIEGE DE VEHICULE DANS LE SENS LONGITUDINAL

(30) Priorität: 23.07.2002 DE 20211090 U
(43) Veröffentlichungstag der Anmeldung: 20.04.2005
(73) Patentinhaber: KEIPER GmbH & Co. KG, 67657 Kaiserslautern (DE)
(72) Erfinder: WILLEMS, Boris, 66839 Schmelz (DE); JOST, Hermann, 67659 Kaiserslautern (DE); KREBS, Jürgen, 67806 Rockenhausen (DE)
(74) Vertreter: Patentanwälte Hosenthien-Held und Dr. Held
(86) Internationale Anmeldenummer: PCT/EP2003/007152
(87) Internationale Veröffentlichungsnummer: WO 2004/009398

(56) Entgegenhaltungen:
- WO-A-02/06078
- DE-A- 3 302 467
- DE-A- 4 103 043
- DE-A- 19 549 378
- FR-A- 1 246 052

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Ein Längseinsteller dieser Art ist aus der DE 198 12 045 A1 bekannt. Die Wälzkörper sind darin innerhalb des Kugelkäfigs in Kagelpaketen angeordnet, welche jeweils in einem Endbereich des Kugelkäfigs angeordnet sind. Jedes Kugelpaket darin umfasst wenigstens drei benachbarte Wälzkörper. Ein aus der DE 33 02 467 A1 bekannter Kugelkäfig hält zwei Wälzkörper in gleichbleibendem Abstand zueinander. Die DE 195 49 378 A1 schlägt einen Längseinsteller mit Stäben und Rohren vor. Ein zwischen Stab und Rohr angeordneter, hülsenförmiger Kugelkäfig bietet äquidistante Plätze an, die mit Wälzkörpers nach wählbaren Mustern bestückt werden können. Diesen bekannten Längseinsteller besteht unter Last, u.U. bereits im Gebrauch, die Gefahr des Brinellierens, d.h. die Wälzkörper werden in das Material der Sitzschienen eingeprägt. Beim Überfahren der Einprägestellen können störende Geräusche auftreten.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, dass die Wälzkörper in Schienenlängsrichtung in ungleichförmigen Abständen angeordnet sind, wird auch bei brinellierten Sitzschienen eine Geräuschbildung durch die Wälzkörper in der subjektiven Wahrnehmung reduziert. Die ungleichförmigen Abstände verhindern eine Verstärkung von Schwingungsanregungen der Wälzkörper. Das spürbare Rattern beim Überfahren der Einprägestellen dur ch mehrere Wälzkörper gleichzeitig wird stark reduziert. Maximal ein Wälzkörper erzeugt dann Geräusche. Der Verschiebekomfört wird somit erhöht.

Die gewünschte Translationsasymmetrie wird mittels einer Anordnung der Wälzkörper in Kugelpaketen zu wenigstens drei Wälzkörpern erreicht, indem die Abstände zwischen jeweils zwei benachbarten Wälzkörpern eines Kugelpakets unterschiedlich sind und im Falle zweier Kugelpakete die Abstände innerhalb der Kugelpakete vorzugsweise einander spiegelsymmetrisch bezüglich der Mitte des Kugelkäfigs entsprechen. Die Abstände innerhalb des Kugelpakets sind entsprechend der fertigungstechnischen Möglichkeiten kleinstmöglich ausgeführt, während die Anzahl der Wälzkörper, wenigstens drei oder mehr, zur Reduzierung der Punktlasten auf der Laufbahn möglichst groß gewählt wird.

Die bevorzugte Ausbildung der Laufbahnen der Sitzschienen für die Wälzkörper aus dem gleichen Material wie die Wälzkörper und/oder die Wahl eines Krümmungsradius der Laufbahnen größer als der Radius der Wälzkörper, vorzugsweise geringfügig größer, welche ein Abrollen der Wälzkörper unter Minimierung der Flächenpressung erlaubt, reduzieren die Gefahr des Brinellierens.

Indem der Kugelkäfig wenigstens eine quer zur Schienenlängsrichtung abstehende Nase aufweist, kann eine Bewegung des Kugelkäfigs quer zur Schienenlängsrichtung, also eine Schwingung, eine Rotation oder ein Umkippen bei Richtungswechsel, gedämpft werden, insbesondere wenn die Nase an einer Laufbahn einer Sitzschiene anliegt.

Dabei sind die Nasen materialmäßig vorzugsweise in Schienenlängsrichtung orientiert, damit sich die Verschiebekraft durch den Kontakt der Nasen mit der Laufbahn nicht meßbar erhöht. Eine bevorzugte bogenförmige Ausgestaltung der Kontaktfläche der Nase an der Laufbahn bietet den Vorteil, dass die Montage erleichtert und die Reibung minimiert wird. Vorteilhafterweise sind jeweils zwei einander diametral gegenüber liegende Nasen vorgesehen, welche ein effektives Höhenmaß, das größer ist als der Durchmesser der Wälzkörper, aufweisen, um eine Vorspannung zu erzeugen. Hierfür ist auch eine bevorzugte Ausbildung des Kugelkäfigs aus Kunststoff von Vorteil. Die Nasen können an vorhandenen Längsrippen angeformt sein, vorzugsweise an den Rücken der Rippen.

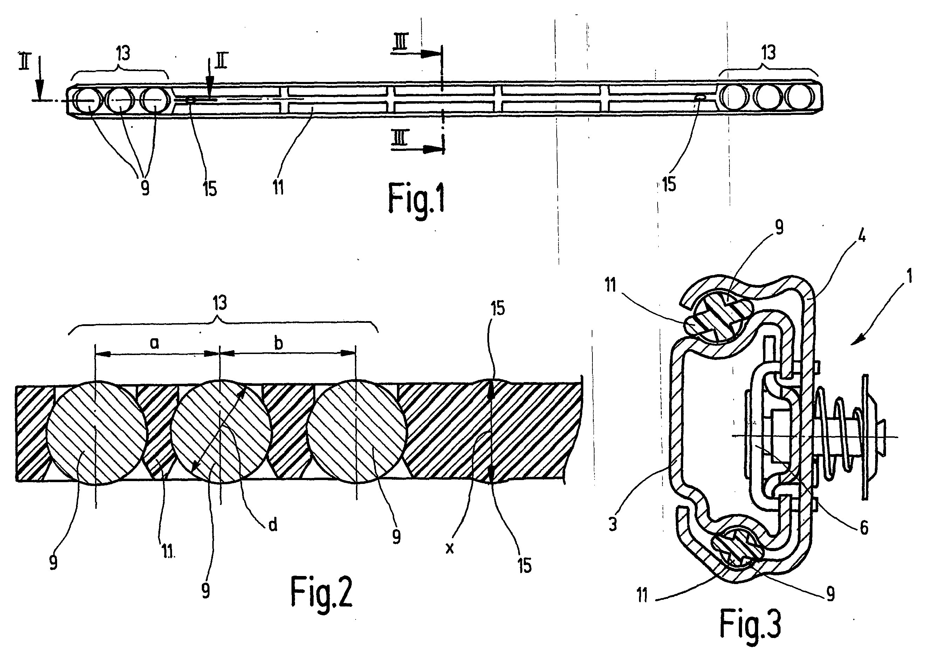

Im folgenden ist die Erfindung anhand eines in der Zeichnung dargestellten Ausführungsbeispiels näher erläutert. Es zeigen
- Fig. 1: eine Draufsicht auf einen Kugelkäfig des Ausführungsbeispiels,
- Fig. 2: einen Längsschnitt entlang der Linie II-II in Fig. 1,
- Fig. 3: einen Querschnitt durch das Ausführungsbeispiel entsprechend der Linie III-III in Fig. 1,
- Fig. 4: eine Teilansicht von Fig. 3,
- Fig. 5: eine erste Abwandlung zu Fig. 4,
- Fig. 6: eine zweite Abwandlung zu Fig. 4, und
- Fig. 7: eine dritte Abwandlung zu Fig. 4.

Ein Längseinsteller 1 für einen längseinstellbaren Fahrzeugsitz, insbesondere für einen Kraftfahrzeugsitz, weist auf beiden Seiten des Fahrzeugsitzes je eine fahrzeugstrukturfeste erste Sitzschiene 3 als Führungsschiene und eine sitzstrukturfeste zweite Sitzschiene 4 als Laufschiene auf. Jede zweite Sitzschiene 4 ist auf der zugehörigen ersten Sitzsschiene 3 in Schienenlängsrichtung gleitend geführt und mittels einer Verriegelungsvorrichtung 6 in verschiedenen Sitzlängspositionen des Fahrzeugsitzes lösbar verriegelbar.

Um bei der Verschiebung der zweiten Sitzschiene 4 entlang der ersten Sitzschiene 3 eine möglichst geringe Reibung überwinden zu müssen, sind zwischen den beiden Sitzschienen 3 und 4 mehrere Wälzkörper, vorliegend Kugeln 9, vorgesehen, welche paketweise von Kugelkäfigen 11 gehalten werden. Die in Schienenlängsrichtung ausgerichteten Kugelkäfige 11 mit den Kugeln 9 sind dabei zwischen Paaren von Laufbahnen-angeordnet, von denen jeweils eine Laufbahn an der ersten Sitzschiene 3 und eine Laufbahn an der zweiten Sitzschiene 4 ausgebildet sind.

Im Ausführungsbeispiel, gemäß welchem die-beiden Sitzschienen 3 und 4 seitlich befestigt sind, ist ein Kugelkäfig 11 mit größeren Kugeln 9 und ein Kugelkäfig 11 mit kleineren Kugeln 9 vorgesehen. Jeder Kugelkäfig 11 ist stabförmig aus Kunststoff ausgebildet und weist in beiden Endbereichen je ein Kugelpaket 13 mit je drei Kugeln 9 auf, auf denen sich die Last gleichmäßig verteilt.

Durch das sogenannte Brinellieren, d.h. das Einprägen der Kugeln 9 in die Laufbahn unter Last in der eingestellten Sitzlängsposition, kommt es bei der Sitzlängseinstellung zu Geräuschen, einer Art Rattern, und zwar dann, wenn die Kugeln 9 die eingeprägten Stellen in der Laufbahn alle zugleich passieren. Zur Vermeidung oder Verringerung des Brinellierens sind die Anzahl der Kugeln 9 (vorliegend drei pro Kugelpaket 13), der Durchmesser der Kugeln 9 und der Abstand der Kugelpakete 13 unter den gegebenen Bedingungen größtmöglich gewählt, die Laufbahn und die Kugeln 9 aus dem gleichen Grundmaterial (Stahl) gefertigt, d.h. mit dem gleichen Elastizitätsmodul versehen und lediglich unterschiedlich gehärtet, und der Krümmungsradius der Laufbahn quer zur Schienenlängsrichtung um maximal 1 mm größer als der Radius der Kugeln 9 gewählt. Durch die letztgenannte Maßnahme wird die Flächenpressung beim Abrollen der Kugeln 9 auf ein Minimum reduziert.

Um im Falle trotzdem auftretender Einprägungen die Geräusche zu verringern, ist der Abstand der Kugeln 9 im Kugelkäfig 11 ungleichförmig ausgestaltet, und zwar sind innerhalb eines Kugelpakets 13 die Abstände der drei benachbarten Kugeln 9 ungleich. Der Abstand a zwischen der am äußeren Ende angeordneten Kugel 9 und der mittleren Kugel 9 ist kleiner als der Abstand b zwischen der mittleren Kugel 9 und der dritten Kugel 9 des Kugelpakets 13. Am anderen Ende des Kugelkäfigs 13 liegen spiegelbildliche Verhältnisse vor, d.h. die Abstände a und b entsprechen einander bezüglich der Mitte des Kugelkäfigs 11. Dadurch erzeugt beim Überfahren der Einprägungen maximal eine Kugel 9 Geräusche, ausgenommen die beim Brinellieren eingestellte Sitzlängsposition wird passiert. Es entsteht zudem keine einheitliche Frequenz zur Anregung weiterer Geräusche. In einer abgewandelten Ausführung ist a größer als b.

Die Kugeln 9 liegen unter Vorspannung an den Laufbahnen an. Dadurch können sich die Kugelkäfige 11 grundsätzlich frei bewegen. Durch Schwingungen des Fahrzeugs und durch ungleichförmiges Rollen der Kugeln 9 kann ein ungleichmäßiges Klappern oder können laterale oder rotatorische Schwingungen der Kugelkäfige 11 auftreten, welches Geräusche verursacht.

Zur Dämpfung - oder im Idealfall zur Unterdrückung - dieser ungewollten Bewegung der Kugelkäfige 11 sind in unmittelbarer Nachbarschaft der Kugelpakete 13 am Kugelkäfig 11 je zwei Nasen 15 angeformt, die paarweise einander diametral gegenüberliegen. Die Nasen 15 stehen von zwei Längsrippen des Kugelkäfigs 11 quer zur Schienenlängsrichtung ab, vorzugsweise vom Rücken dieser Längsrippen. Die Nasen 15 weisen ein effektives Höhenmaß x (diametraler Abstand zwischen den am weitesten quer zur Schienenlängsrichtung vorspringenden Bereichen der beiden Nasen 15) auf, welcher größer ist als der Durchmesser d der benachbarten Kugeln 9. Die Nasen 15 liegen daher an den Laufbahnen an und bremsen die ungewollten Bewegungen der Kugelkäfige 11. Die Nasen 15 sind materialmäßig in Schienenlängsrichtung orientiert, damit sich die Verschiebekraft durch den Kontakt der Nasen 15 allenfalls geringfügig erhöht. Im Bereich der Kontaktflächen zu den Laufbahnen sind die Nasen 15 bogenförmig gestaltet, um die Montage zu erleichtern und um die Reibung zu minimieren.

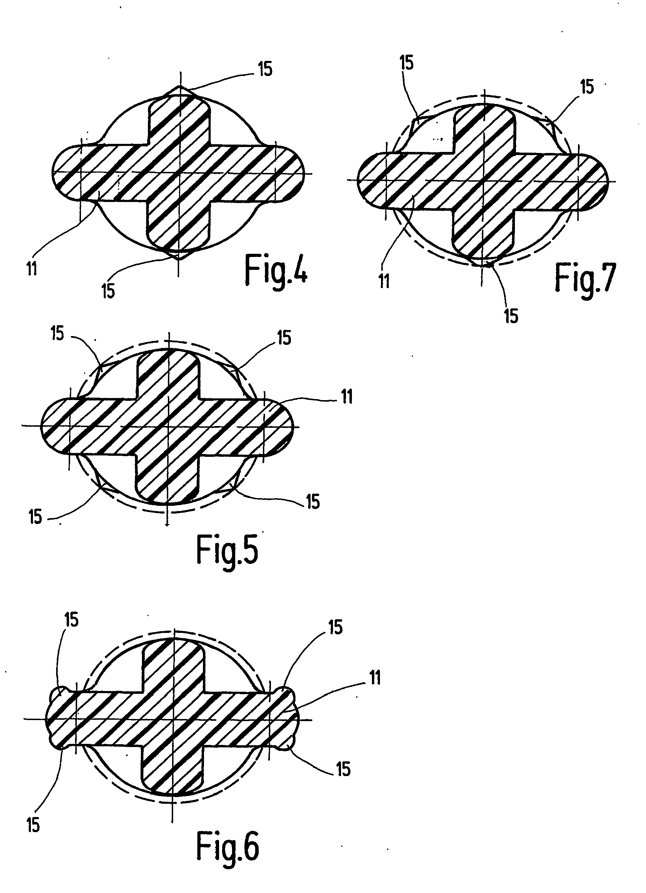

In einer ersten Abwandlung gemäß Fig. 5 sind die jeweils vier Nasen 15 vorgesehen, die auf Querrippen des Kugelkäfigs 11 jeweils zwischen den Längsrippen ausgebildet sind. In einer zweiten Abwandlung gemäß Fig. 6 sind ebenfalls jeweils vier Nasen 15 vorgesehen, die paarweise auf den beiden Längsrippen des Kugelkäfigs angeordnet sind, welche in dem Spalt zwischen den Laufbahnen und Sitzschienen 3 und 4 angeordnet sind. In einer dritten Abwandlung gemäß Fig. 7 sind als Mischform zwischen dem Ausführungsbeispiel und der ersten Abwandlung jeweils drei Nasen 15 vorgesehen, welche auf den Querrippen sitzen, wobei jweils eine Nase 15 auf einem Kreuzungspunkt der Quer- und der Längsrippen sitzt. Das effektive Höhenmaß x, vorliegend also der Durchmesser des umschreibenden Außenkreises, ist jeweils größer als der Durchmesser der Kugeln 9. Insbesondere bei der zweiten Abwandlung können die Nasen 15 an beliebigen Positionen in Längsrichtung des Kugelkäfigs 11 angeordnet sein.

### Bezugszeichenliste

- 1: Längseinsteller
- 3: erste Sitzschiene
- 4: zweite Sitzschiene
- 6: Verriegelungsvorrichtung
- 9: Kugel, Wälzkörper
- 11: Kugelkäfig
- 13: Kugelpaket
- 15: Nase
- a, b: Abstände der Kugeln
- d: Durchmesser der Kugel
- x: effektives Höhenmaß

## Patentansprüche

1. Längseinsteller für einen Fahrzeugsitz, insbesondere für einen Kraftfahrzeugsitz, mit einer ersten Sitzschiene (3), einer in Schienenlängsrichtung gleitend zur ersten Sitzschiene (3) verschiebbaren zweiten Sitzschienen (4), zwischen den beiden Sitzschienen (3, 4) angeordneten Wälzkörpern (9) und wenigstens einem Kugelkäfig (11) zum Halten der Wälzkörper (9),
wobei die Wälzkörper (9) in Kugelpaketen (13) innerhalb des Kugelkäfigs (11) angeordnet sind und jeder Kugelkäfig (11) zwei Kugelpakete (13) aufweist, welche jeweils in einem Endbereich des Kugelkäfigs (11) angeordnet sind, wobei jedes Kugelpaket (13) wenigstens drei benachbarte Wälzkörper (9) umfasst, nämlich einen äußeren Wälzkörper (9), einen mittleren Wälzkörper (9) und einen weiter innen gelegenen Wälzkörper (9), **dadurch gekennzeichnet, dass** die Wälzkörper (9) in Schienenlängsrichtung in ungleichförmigen Abständen (a, b) angeordnet sind, indem der Abstand (a) zwischen dem äußeren Wälzkörper (9) und dem mittleren Wälzkörper (9) kleiner oder größer ist als der Abstand (b) zwischen dem mittleren Wälzkörper (9) und dem weiter innen gelegenen Wälzkörper (9).

2. Längseinsteller nach Anspruch 1, **dadurch gekennzeichnet, dass** die Abstände (a, b) innerhalb der Kugelpakete (13) einander spiegelsymmetrisch bezüglich der Mitte des Kugelkäfigs (11) entsprechen.

3. Längseinsteller nach Anspruch 1 oder 2, **dadurch gekennzeichnet, dass** der Kugelkäfig (11) stabförmig aus Kunststoff ausgebildet ist.

4. Längseinsteller nach einem der vorhergehenden Ansprüche, **dadurch gekennzeichnet, dass** die Wälzkörper (9) auf Laufbahnen der Sitzschienen (3, 4) laufen, wobei die Laufbahnen der Sitzschienen (3, 4) vorzugsweise aus dem gleichen Grundmaterial wie die Wälzkörper (9) bestehen und der Krümmungsradius der Laufbahnen der Sitzschienen (3, 4) quer zur Schienenlängsrichtung vorzugsweise größer ist als der Radius der Wälzkörper (9).

5. Längseinsteller nach einem der vorhergehenden Ansprüche, **dadurch gekennzeichnet, dass** der Kugelkäfig (11) wenigstens eine quer zur Schienenlängsrichtung abstehende Nase (15) aufweist, welche vorzugsweise an einer Laufbahn einer Sitzschiene (3, 4) anliegt, wobei die Kontaktfläche der Nase (15) mit der Laufbahn vorzugsweise bogenförmig gestaltet und die Nase (15) vorzugsweise in Schienenlängsrichtung orientiert ist.

6. Längseinsteller nach Anspruch 5, **dadurch gekennzeichnet, dass** die Nase (15) am Kugelkäfig (11), vorzugsweise in unmittelbarer Nachbarschaft eines Wälzkörpers (9) und vorzugsweise an einer Längsrippe und/oder Querrippe des Kugelkäfigs (11), angeformt ist, wobei die Nase (15) vorzugsweise in einem Spalt zwischen den Sitzschienen (3, 4) angeordnet ist und vorzugsweise jeweils zwei einander diametral gegenüber liegende Nasen (15) vorgesehen sind, deren effektives Höhenmaß (x) vorzugsweise größer ist als der Durchmesser (d) der Wälzkörper (9), indem der Durchmesser (x) des Kreises, welcher die Nasen (15) einbeschreibt, größer ist als der Durchmesser (d) der Wälzkörper (9).

7. Längseinstellbarer Fahrzeugsitz, **gekennzeichnet durch** einen Längseinsteller (1) nach einem der vorhergehenden Ansprüche.

## Claims

1. A longitudinal adjuster for a vehicle seat, particularly for a motor vehicle seat, with a first seat rail (3), a second seat rail (4), which, relative to the first seat rail (3), can carry out a sliding movement in longitudinal direction of the rail, with rolling elements (9) which are mounted between the two seat rails (3,4), and with at least one ball cage (11) for holding the rolling elements (9), wherein the rolling elements (9) are arranged as ball stacks (13) within the ball cage (11), each ball stack (13) comprising at least three adjacent rolling elements (9), namely one outer rolling element (9), one central rolling element (9) and one rolling element (9) which is located more inside, the rolling elements (9) being arranged at irregular distances (a, b) in longitudinal direction of the rail, and the distance (a) between the outer rolling element (9) and the central rolling element (9) being smaller or bigger than the distance (b) between the central rolling element (9) and the rolling element which is located more inside (9), and each ball cage (11) being provided with two ball stacks (13), each of which is arranged in one end region of the ball cage (11).

2. Longitudinal adjuster according to Claim 1, **characterized in that** the distances (a, b) within the ball stacks (13) correspond to each other mirror-symmetrically, with respect to the center of the ball cage (11).

3. Longitudinal adjuster according to Claim 1 or 2, **characterized in that** the balm cage (11) is rod-shaped and made of plastic.

4. Longitudinal adjuster according to any of the preceding claims, **characterized in that** the rolling elements (9) run on tracks of the seat rails (3, 4), wherein the tracks of the seat rails (3,4) are preferably made of the same basic material as the rolling elements (9), and the radius of curvature of the tracks of the seat rails (3, 4), transversely to the longitudinal direction of the rail, is bigger than the radius of the rolling elements (9).

5. Longitudinal adjuster according to any of the preceding claims, **characterized in that** the ball cage (11) has at least one lug (15) which projects transversely to the longitudinal direction of the rail and which preferably fits closely to a track of a seat rail (3, 4), wherein the contact surface of the lug (15) with the track preferably is arched and the lug (15) preferably is orientated in longitudinal direction of the rail.

6. Longitudinal adjuster according to Claim 5, **characterized in that** the lug (15) at the ball cage (11) preferably is moulded in the immediate vicinity of a rolling element (9) and preferably at a longitudinal rib and/or a transverse rib of the ball cage (11), wherein the lug (15) preferably is arranged in a gap between the seat rails (3, 4) and preferably two lugs (15) are provided, which are diametrically opposed and the effective height dimension (x) of which preferably is bigger than the diameter (d) of the rolling elements (9), **in that** the diameter (x) of the circle which inscribes the lugs (15) is bigger than the diameter (d) of the rolling elements (9).

7. Vehicle seat (1), adjustable in the longitudinal direction, **characterized by** a longitudinal adjuster (1) according to any of the preceding claims.

## Revendications

1. Dispositif de réglage longitudinal pour un siège de véhicule, en particulier pour un siège de véhicule automobile, avec un premier rail de siège (3), un second rail de siège (4) mobile coulissant par rapport au premier rail de siège (3) dans la direction longitudinale des rails, des corps de roulement (9) disposés entre les deux rails de siège (3, 4) et au moins une cage à billes (11) pour maintenir les corps de roulement (9), les corps de roulement (9) étant disposés en paquets de billes (13) à l'intérieur de la cage à billes (11) et chaque cage à billes comprenant deux paquets de billes (13), chacun d'eux étant disposé respectivement dans une région terminale de la cage à billes (11), chaque paquet de billes (13) comprenant au moins trois corps de roulement voisins (9), à savoir un corps de roulement (9) externe, un corps de roulement (9) médian et un corps de roulement (9) disposé plus à l'intérieur, **caractérisé par le fait que** les corps de roulement (9) sont disposés à des distances (a, b) inégales dans la direction longitudinale des rails du fait que la distance (a) entre le corps de roulement (9) externe et le corps de roulement (9) médian est inférieure ou supérieure à la distance (b) entre le corps de roulement (9) médian et le corps de roulement (9) disposé plus à l'intérieur.

2. Dispositif de réglage longitudinal selon la revendication 1, **caractérisé par le fait que** les distances (a, b) à l'intérieur des paquets de billes (13) se correspondent entre elles en symétrie spéculaire par rapport au milieu de la cage à billes (11).

3. Dispositif de réglage longitudinal selon l'une des revendications 1 ou 2, **caractérisé par le fait que** la cage à billes (11) est réalisée sous la forme d'une tige en matière plastique.

4. Dispositif de réglage longitudinal selon l'une des revendications précédentes, **caractérisé par le fait que** les corps de roulement (9) roulent sur des pistes de roulement des rails de siège (3, 4), les pistes de roulement des rails de siège (3, 4) étant composées de préférence du même matériau de base que les corps de roulement (9) et le rayon de courbure des pistes de roulement des rails de siège (3, 4) transversalement à la direction longitudinale des rails étant de préférence supérieur au rayon des corps de roulement (9).

5. Dispositif de réglage longitudinal selon l'une des revendications précédentes, **caractérisé par le fait que** la cage à billes (11) comprend au moins un nez (15) faisant saillie transversalement à la direction longitudinale des rails, lequel repose de préférence sur une piste de roulement d'un rail de siège (3, 4), la surface de contact du nez (15) avec la piste de roulement étant agencée de préférence de façon courbée et le nez (15) étant orienté de préférence dans la direction longitudinale des rails.

6. Dispositif de réglage longitudinal selon la revendication 5, **caractérisé par le fait que** le nez (15) est formé sur la cage à billes (11), de préférence dans le voisinage direct d'un corps de roulement (9) et de préférence au niveau d'une nervure longitudinale et/ou d'une nervure transversale de la cage à billes (11), le nez (15) étant disposé de préférence dans une fente entre les rails de siège (3, 4) et de préférence deux nez (15) diamétralement opposés l'un à l'autre étant prévus, dont la hauteur effective (x) est de préférence supérieure au diamètre (d) des corps de roulement (9) du fait que le diamètre (x) du cercle qui circonscrit les nez (15) est supérieur au diamètre (d) des corps de roulement (9).

7. Siège de véhicule réglable en longueur, **caractérisé par le fait qu'**il comprend un dispositif de réglage longitudinal (1) tel que défini à l'une des revendications précédentes.
